(19) Europäisches Patentamt / European Patent Office / Office européen des brevets

(11) **EP 2 762 180 A1**

(12) **EUROPEAN PATENT APPLICATION**
published in accordance with Art. 153(4) EPC

(43) Date of publication:
06.08.2014 Bulletin 2014/32

(21) Application number: 12834868.7

(22) Date of filing: 26.09.2012

(51) Int Cl.:
*A61M 1/36* (2006.01)    *A61M 1/18* (2006.01)
*B01D 63/00* (2006.01)    *B01D 63/02* (2006.01)
*B01D 69/08* (2006.01)

(86) International application number:
PCT/JP2012/074629

(87) International publication number:
WO 2013/047549 (04.04.2013 Gazette 2013/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 30.09.2011 JP 2011216291

(71) Applicant: **Toray Industries, Inc.**
**Tokyo 103-8666 (JP)**

(72) Inventors:
• **FUJIEDA, Hiroaki**
**Otsu-shi**
**Shiga 520-8558 (JP)**

• **UENO, Yoshiyuki**
**Otsu-shi**
**Shiga 520-8558 (JP)**
• **TANAKA, Kazumi**
**Otsu-shi**
**Shiga 520-8558 (JP)**

(74) Representative: **Webster, Jeremy Mark et al**
**Mewburn Ellis LLP**
**33 Gutter Lane**
**London**
**EC2V 8AS (GB)**

(54) **PURIFICATION COLUMN AND METHOD FOR MANUFACTURING PURIFICATION COLUMN**

(57) The present invention aims to provide a purification column having excellent performance to remove substances to be removed. Further, the present invention aims to provide a method for producing the purification column described above. The above object can be achieved with a purification column comprising a cylindrical casing having partition walls formed at both side ends, the casing containing therein hollow fibers whose both ends are fixed by bonding to the partition walls such that the both ends open to the outside of the partition walls, wherein penetrating holes that penetrate the partition walls to communicate with the inside and outside of the casing are formed in the partition walls at both ends of the casing.

Fig. 6

EP 2 762 180 A1

**EP 2 762 180 A1**

**Description**

TECHNICAL FIELD

The present invention relates to a purification column in which hollow fibers used for blood purification or the like are contained in a casing, preferably a purification column that efficiently allows adsorption of toxic substances in a liquid to be treated.

BACKGROUND ART

Hollow-fiber-type columns that have been conventionally and generally used were those obtained by, for example, the following method. First, a cylindrical casing is filled with a bundle of hollow fibers (in the present invention, the "hollow fiber" also includes a "hollow fiber membrane"), and both ends of the hollow fiber bundle are fixed to inner surfaces of the casing with a resin composition to provide partition walls. Subsequently, a cap member called a header having a connection port to be used as an inlet or outlet for the liquid that is to be treated (which may be also referred to as "liquid to be treated") is installed at each end of the casing, to obtain a hollow-fiber-type column. In the method of using such a hollow-fiber-type column, the liquid to be treated is supplied from the inlet in the header, and, when the liquid passes through the inside of each hollow fiber membrane, purification treatment is carried out with a purification liquid such as a dialysate outside the hollow fibers. Thereafter, the liquid to be treated is discharged from the outlet in the header.

The process of fixing both ends of the hollow fiber bundle with a resin composition to provide partition walls is called the potting process. For example, both openings of the casing loaded with the hollow fiber membrane bundle are closed by covering with caps (which may also be referred to as "partition-wall-forming jigs"), and, in this state, a liquid of a resin such as polyurethane is injected into the casing from the inlet and outlet for the liquid to be treated provided in a protruding state in the vicinities of both ends of the outer circumference of the casing. This resin liquid is allowed to flow to the ends of the casing by the centrifugal force and then hardened. Subsequently, the caps are removed and unnecessary portions are cut off. By this, the ends of the hollow fiber bundle are fixed to the ends of the casing, and both ends of the hollow fiber membranes are opened.

Attempts have been made so far to remove substances by introduction of a liquid to be treated such as blood into this type of hollow-fiber-type column, and a method in which a ligand that interacts with the substance to be adsorbed is substantially uniformly fixed on the surface of hollow fibers to remove the harmful substance (subject to be removed) by adsorption is known (Patent Document 1).

Further, a column filled with an adsorbent outside hollow fibers in a casing, in which blood is allowed to flow inside the hollow fibers while plasma filtered to the outside of the hollow fibers is purified with the adsorbent, followed by returning the purified plasma into the blood filter by back-filtration, has been devised (Patent Document 2).

Further, there are also cases where holes are given to potting sections (partition walls) at both ends of a casing such that the holes penetrate the potting sections along the direction of thickness of the partition walls, in an attempt to allow uniform dispersion of the liquid to be treated to both the inside and outside of the hollow fibers (Patent Documents 3, 4, 5 and 6).

On the other hand, there are also cases where both ends of a purification column are sealed with a mesh or the like instead of fixing both ends of the purification column by potting (Patent Documents 7, 8 and 9).

Further, there is also a case where only one side of a purification column is fixed by potting (Patent Document 10).

PRIOR ART DOCUMENTS

[Patent Documents]

[Patent Document 1] JP 2-29260 A
[Patent Document 2] JP 8-141076 A
[Patent Document 3] JP 5-161831 A
[Patent Document 4] JP 5-161832 A
[Patent Document 5] JP 6-343836 A
[Patent Document 6] JP 2007-90309 A
[Patent Document 7] JP 2009-254695 A
[Patent Document 8] JP 2011-156022 A
[Patent Document 9] WO2009/128564

[Patent Document 10] Japanese Translated PCT Patent Application Laid-open No. 2002-504020

## SUMMARY OF THE INVENTION

### PROBLEMS, TO BE SOLVED BY THE INVENTION

However, the above-described prior art has the following problems.

That is, the technique described in Patent Document 1 has a drawback in that the outside of the hollow fibers is less likely to contribute to the adsorptive removal as compared to the inside of the hollow fibers, so that the adsorption function of interest may not be exerted.

Further, in the method described in Patent Document 2, a separation membrane such as a hollow fiber membrane is fixed in a casing, and.the casing is filled with an adsorbent in a later step. Therefore, there are problems such as complication of the process, and necessity of securing of an inlet for the adsorbent and of uniform dispersion of the adsorbent. Further, when the liquid to be treated passes through the purification column, the filtrate and the plasma component (liquid to be treated) are more likely to move consistently from the inside of the hollow fiber membrane to the outside thereof in the first half of the process. However, in the latter half of the passing process, they are more likely to move consistently from the outside of the hollow fiber membrane to the inside thereof. Accordingly, there is a concern that protein components in blood and particles used as the adsorbent may adhere to holes of the hollow fiber membranes to cause clogging of the membranes, resulting in a low performance.

Further, in the inventions described in Patent Documents 3, 4, 5 and 6, since one end of the hollow fiber is closed, there is a concern that pressure loss of the liquid to be treated may increase and clogging may easily occur, leading to an increased column pressure.

Further, in the methods described in Patent Documents 7, 8 and 9, although it is possible to introduce the liquid to be treated into the inside and outside of the hollow fibers at the same time, it is difficult to control the flow ratio between the inside of the hollow fibers and the outside of the hollow fibers, and the flow in the column may be localized to a part of the casing, so that there are problems from the viewpoint of efficiency and the viewpoint of safety. Further, if the end portions are cut in the state where the ends of the hollow fibers are not fixed, fine foreign substances or the like may be generated, and these may be eluted.

Further, in the method described in Patent Document 10, since there are no penetrating holes, the outside of the hollow fibers does not sufficiently contribute to the adsorption. Moreover, since one end of each hollow fiber is not fixed, there are problems in that adhesion among fibers may occur to cause reduction in the surface area and that fibers are easily broken during transportation. Further, Patent Document 10 also describes that the discharging portion for the liquid to be treated in the purification column is closed and another discharging portion is provided in the body portion of the casing. However, since the inside of the column becomes dead end, pressure loss is very large. In cases of a hollow fiber membrane module for purification of blood such as an artificial kidney, the operation of returning blood into the body using physiological saline (this may also be called as "autotransfusion") is carried out after completion of hemodialysis. There is a concern that, in this operation, the phenomenon called residual blood, in which a large amount of blood remains in the hollow fibers, may increase.

Given the above-described problems of the prior art, the present invention aims to provide a purification column having very excellent performance to remove substances to be removed. Further, the present invention aims to provide a method for producing the purification column described above.

### MEANS FOR SOLVING THE PROBLEMS

In order to solve the above-described problems, the present invention employs a constitution of a purification column comprising a cylindrical casing having partition walls formed at both side ends, the casing containing therein hollow fibers whose both ends are fixed by bonding to the partition walls such that the both ends open to the outside of the partition walls, wherein penetrating holes that penetrate the partition walls to communicate with the inside and outside of the casing are formed in the partition walls at both ends of the casing.

### EFFECT OF THE INVENTION

The present invention can provide a purification column in which the liquid to be treated can be allowed to flow in the inside and outside of hollow fibers at the same time in a cylindrical casing, wherein, by appropriately selecting the material of the hollow fibers, substances in the liquid to be treated can be very efficiently removed.

BRIEF DESCRIPTION OF THE DRAWINGS

Fig. 1 is a schematic diagram illustrating the area in the vicinity of the outer circumference and the area in the vicinity of the central portion, in the end face of the partition wall.

Fig. 2 is a schematic diagram illustrating 4 areas in the end face of the partition wall (area $A_1$), divided by 2 arbitrary straight lines that pass through the center of gravity O at a central angle of 90°.

Fig. 3 is a schematic diagram illustrating 4 areas in the area $A_1$, divided by the 2 straight lines produced by rotating the 2 straight lines used in Fig. 2 around the center of gravity O at an angle of 45°.

Fig. 4 is a schematic diagram illustrating that penetrating holes are arranged in the area in the vicinity of the outer circumference in the end face of the partition wall.

Fig. 5 is a schematic diagram drawn by rotating the schematic diagram in Fig. 4 at an angle of 45°.

Fig. 6 is a schematic diagram illustrating that penetrating holes are arranged in the area in the vicinity of the outer circumference in the end face of the partition wall.

Fig. 7 is a schematic diagram illustrating that penetrating holes are arranged in the area in the vicinity of the outer circumference in the end face of the partition wall.

Fig. 8 is a schematic diagram (side view) illustrating a cylindrical casing provided with a resin inlet.

Fig. 9 is a schematic diagram (perspective view) illustrating a partition-wall-forming jig having, in the inner side thereof, protruding portions for forming penetrating holes.

Fig. 10 is a schematic diagram (side view) illustrating a purification column..

Fig. 11 is a circuit diagram used for measurement of the clearance of β2-MG.

BEST MODE FOR CARRYING OUT THE INVENTION

The purification column of the present invention has a cylindrical casing and hollow fibers. Further, in the purification column of the present invention, partition walls are formed at both side ends of the cylindrical casing, and the cylindrical casing contains the hollow fibers therein. Further, in the purification column of the present invention, penetrating holes that penetrate the partition walls to communicate with the inside and outside of the casing are formed in the partition walls at both ends of the casing.

As described in detail below, the purification column of the present invention is provided for uses such as those in which the liquid to be treated is introduced from the outside. In common conventional hollow-fiber type artificial kidneys and water purifiers, both ends of hollow fibers are fixed to partition walls in a state where the ends open to the outside of the partition walls. By this, the ends of hollow fibers can be fixed to the partition walls. Further, by this, the liquid to be treated can be introduced from the outside of the partition wall into the inside of the purification column through the inside (hollow portions) of the hollow fibers. However, since there are no other penetrating holes in the partition walls of conventional hollow-fiber type artificial kidneys and water purifiers, introduction of the liquid to be treated from the outside of the partition wall into the inside of the purification column is achieved only through the inside of the hollow fibers.

Also in the purification column of the present invention, both ends of the hollow fibers are fixed by bonding such that the both ends open to the outside of the partition walls. By this, similarly to the prior art, the ends of the hollow fibers can be fixed to the partition walls, and, at the same time, the liquid to be treated can be introduced from the outside of the partition wall into the inside of the purification column through the inside of the hollow fibers.

However, in the purification column of the present invention, penetrating holes that penetrate the partition walls to communicate with the inside and outside of the casing are formed in the partition walls at both ends of the casing. The penetrating hole herein does not mean a space formed by a hollow fiber in the partition wall, but means an opening that penetrates, separately from the hollow fiber, the partition wall in the longitudinal direction of the hollow fiber. That is, the penetrating hole in the present invention is a hole that is present in the partition wall and penetrates the partition wall such that the hole communicates with the inside and outside of the casing.

By providing penetrating holes that communicate with the inside and outside of the casing, the liquid to be treated can be introduced from the outside of the partition wall into the purification column also through the penetrating holes. Thus, in the present invention, the liquid to be treated can be introduced into both inside and outside of the hollow fibers, and hence the liquid to be treated can be appropriately distributed in the whole inside of the casing. Thus, by introducing the liquid to be treated into not only the inside of the hollow fibers but also the outside of the hollow fibers, the contact area between the liquid to be treated and the hollow fibers remarkably increases, and the substance to be adsorbed can therefore be efficiently removed by adsorption. Further, in cases where pores are formed in the membrane thickness portion of the hollow fiber, the dispersibility of the substance to be adsorbed into the holes of the membrane thickness portion can be improved by introducing the liquid to be treated from both sides of the membrane thickness portion.

That is, the purification column of the present invention is a column comprising a cylindrical casing having partition walls formed at both side ends, which casing contains hollow fibers, wherein, by providing penetrating holes in the partition walls, the liquid to be treated can be appropriately distributed in the whole inside of the casing and a substance contained in the liquid to be treated can be efficiently removed by adsorption.

Further, in the present invention, the shape (cross-sectional shape) of each end of the casing may be, for example, circular or elliptic, and, for the purpose of fixing ends of the contained hollow fibers and the like, the end of the casing preferably has a partition wall formed with a urethane resin or the like.

The shape of the penetrating hole as observed in the cross section of the partition wall is not limited, and the shape is preferably circular or elliptic in view of that fact that such a shape hardly causes clogging with the liquid to be treated. In terms of the shape as observed from the side (in the direction of the flow of the liquid to be treated), the channel preferably has a smooth cylindrical shape, in consideration of the pressure loss. In this case, the cross-sectional area may be either the same or different between the side having the inlet and the side having the outlet for the liquid to be treated.

In the partition wall, when the surface in the side contacting with the inside of the casing sealed by the partition wall is defined as "the inner wall surface of the partition wall" and the surface in the side contacting with the outside of the casing sealed by the partition wall is defined as "the outer wall surface of the partition wall", both ends of the hollow fibers are in a state where the ends open at the outer wall surface of the partition wall in the present invention, so that the liquid to be treated can flow through the inside of the hollow fibers from the inlet side to the outlet side, which are communicating with each other.

On the end surfaces of the casing, the positions of the penetrating holes, and arrangement of the plurality of penetrating holes are important for optimizing the flow of the liquid to be treated. In cases where the penetrating holes provided in the partition wall in the side having the inlet for the liquid to be treated have a positional relationship with the penetrating holes provided in the outlet side such that these are connected to each other at the shortest distance along the axial direction of the casing, the liquid to be treated that passes through the penetrating holes is likely to flow along a short path. In cases where the liquid flows along a short path in the column, the liquid to be treated contacts with only a part of the hollow fibers, so that the performance of removal by adsorption may be insufficient.

Therefore, the positions of the penetrating holes on the inner wall surface of the partition wall are preferably different between the side having the inlet and the side having the outlet for the liquid to be treated. That is, when the penetrating holes present on the inner wall surface of the partition wall in the side having the inlet for the liquid to be treated are projected on the inner wall surface of the partition wall in the side having the outlet for the liquid to be treated, the projection images of the penetrating holes on the inner wall surface of the partition wall in the side having the inlet for the liquid to be treated preferably do not overlap with the penetrating holes present on the inner wall surface of the partition wall in the side having the outlet for the liquid to be treated. The above description is based on the assumption that both side ends of the casing have the same shape.

The arrangement of the penetrating holes is described below by way of 2 preferred modes.

In the first case, the penetrating holes in the side where the liquid to be treated is introduced are placed in the vicinity of the outer circumference of the end face of the partition wall, and the penetrating holes in the side where the liquid to be treated is discharged are placed in the vicinity of the center of the end face of the partition wall. By arranging the penetrating holes in this manner, the contact efficiency of the whole hollow fibers in the column can be increased.

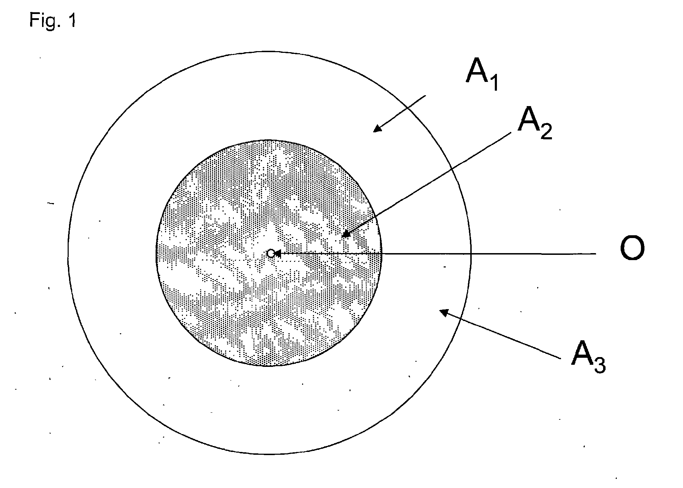

A specific example is described by way of Fig. 1, which is a schematic diagram of the end portion. The item (a) or (b) below is preferably satisfied when, as shown in Fig. 1, on the inner wall surface of one of the partition walls at the end faces of the casing, the whole area is defined as $A_1$; the center of gravity of $A_1$ is defined as O; the area surrounded by the similar figure of $A_1$ with a scale factor of 1/2 whose center of gravity is located at O similarly to $A_1$ is defined as $A_2$; and the area excluding $A_2$ from $A_1$ is defined as $A_3$. Especially preferably, both (a) and (b) are satisfied. The "similar figure with a scale factor of 1/2 whose center of gravity is located at O" herein means the shape surrounded by the center points that equally divide straight lines when the straight lines are drawn by arbitrary connecting the center of gravity with the outer circumference of the surface of the partition wall.

(a) On the inner wall surface of the partition wall in the side at which the liquid to be treated is introduced, the area of penetrating holes present in $A_3$ corresponds to not less than 70% of the total area of penetrating holes.
(b) On the inner wall surface of the partition wall in the side at which the liquid to be treated is discharged, the area of penetrating holes present in $A_2$ corresponds to not less than 70% of the total area of penetrating holes.

That is, in this case, on the inner wall surface of each partition wall, penetrating holes corresponding to not less than 70%, more preferably not less than 90% of the total area of penetrating holes are present in $A_3$ in the side where the liquid to be treated is introduced, and penetrating holes corresponding to not less than 70%, more preferably not less than 90% of the total area of penetrating holes are present in $A_2$ in the side where the liquid to be treated is discharged.

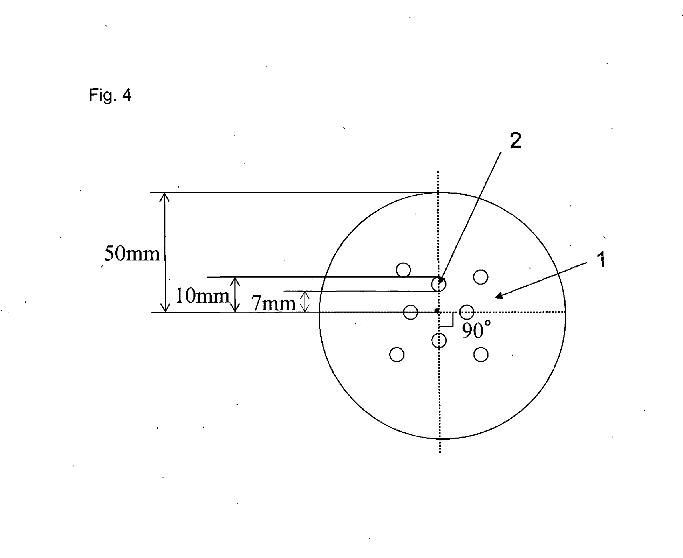

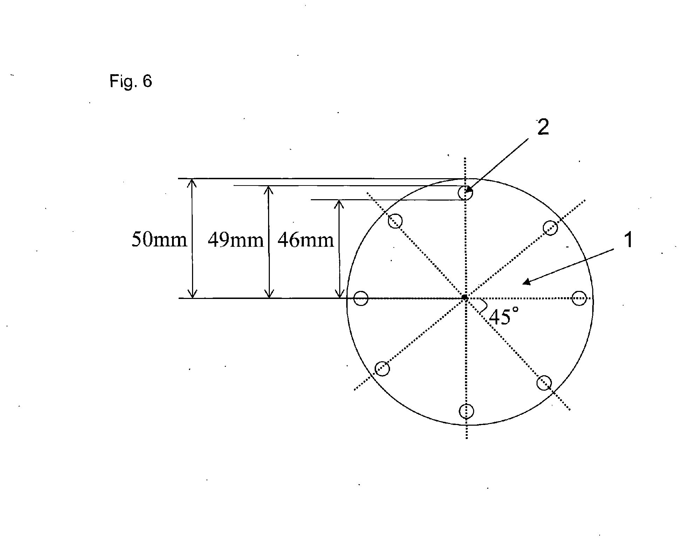

Here, an example of such wall surfaces is shown in Fig. 4 and Fig. 6. Fig. 6 is a schematic diagram illustrating an example in which, in the inner wall surface of a partition wall in the purification column, penetrating holes corresponding to not less than 70% of the total area of penetrating holes are present in $A_3$, and Fig. 4 is a schematic diagram illustrating an example in which, in the outer wall surface of a partition wall in the purification column, penetrating holes corresponding to not less than 70% of the total area of penetrating holes are present in $A_2$.

In another preferred example of the present invention, the penetrating holes in the side where the liquid to be treated is introduced are placed in the vicinity of the center of the end face of the partition wall, and the penetrating holes in the side where the liquid to be treated is discharged are placed in the vicinity of the outer circumference of the end face of the partition wall. By arranging the penetrating holes in this manner, the pressure loss in the column can be reduced, and the possibility of retention of the liquid to be treated can be reduced.

More specifically, the item (c) or (d) below is satisfied, and especially preferably, both (c) and (d) are satisfied.

(c) On the inner wall surface of the partition wall in the side at which the liquid to be treated is introduced, the area of penetrating holes present in $A_2$ corresponds to not less than 70% of the total area of penetrating holes.
(d) On the inner wall surface of the partition wall in the side at which the liquid to be treated is discharged, the area of penetrating holes present in $A_3$ corresponds to not less than 70% of the total area of penetrating holes.

That is, in this case, on the inner wall surface of each partition wall, penetrating holes corresponding to not less than 70%, more preferably not less than 90% of the total area of penetrating holes are present in $A_2$ in the side where the liquid to be treated is introduced, and penetrating holes corresponding to not less than 70%, more preferably not less than 90% of the total area of penetrating holes are present in $A_3$ in the side where the liquid to be treated is discharged.

The size of the penetrating holes in the present invention is described below by way of preferred examples.

In cases where the area of each penetrating hole (that is, individual penetrating hole) is too large, the flow of the liquid to be treated may be uneven in the whole column, while in cases where the area is too small, the pressure loss may be large when the liquid to be treated passes through the column. Therefore, when, in the partition wall, the surface in the side contacting with the inside of the casing sealed by the partition wall is defined as "the inner wall surface of the partition wall", and the whole area of the inner wall surface of the partition wall in the end face of the casing is defined as $A_1$, the upper limit of the area of each penetrating hole (individual penetrating hole) on the inner wall surface of the partition wall is preferably not more than 1/8, more preferably not more than 1/20 of the area of $A_1$. Further, in terms of the lower limit, when the whole area of the inner wall surface of the partition wall in the end face of the casing is defined as $A_1$, the area of each penetrating hole is preferably not less than 1/5000, more preferably not less than 1/2000 of the area of $A_1$.

In cases where the area occupied by the penetrating holes per end face is too large, the strength of the partition wall is low, and there is an increased concern of breakage of the column due to the impact caused during transportation or manipulation, and leakage of the liquid to be treated. On the other hand, in cases where the occupied area is too small, there is a concern of, for example, an increased pressure during introduction of the liquid to be treated, or poor distribution of the liquid to be treated. Therefore, in terms of the lower limit, the total area of penetrating holes on the inner wall surface of the partition wall is not less than 1/1000, more preferably not less than 1/200, still more preferably not less than 1/50 of the area of $A_1$. On the other hand, in terms of the upper limit, the total area of penetrating holes is not more than 1/2, more preferably not more than 1/4 of the area of $A_1$. Thus, especially preferably, in the present invention, on the inner wall surface of the partition wall in each end face of the casing, the area of individual penetrating hole is not more than 1/8 of the area of the above-described area $A_1$ and the total area of the penetrating holes is not less than 1/1000 and not more than 1/2 of the area of the above-described area $A_1$.

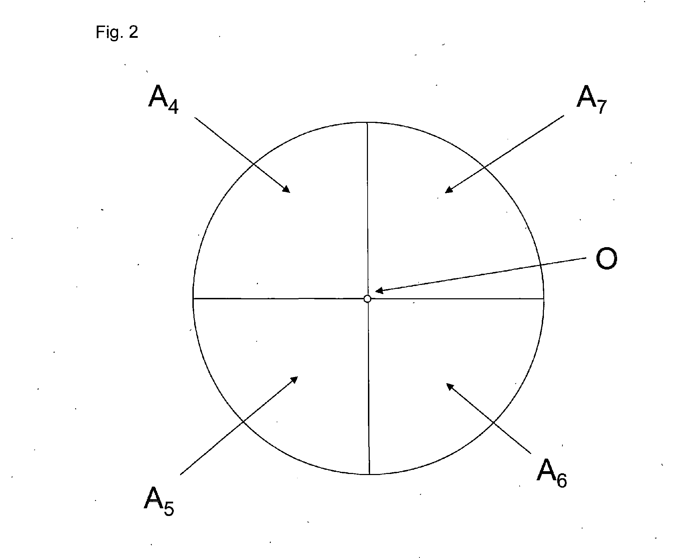

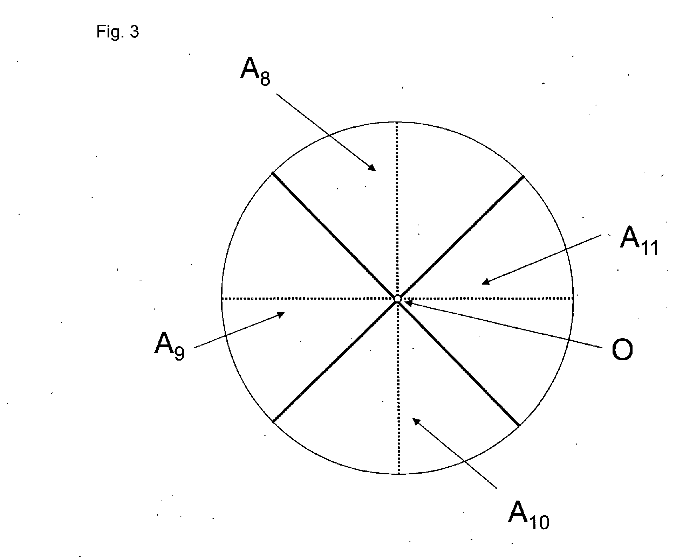

In terms of the positions of the penetrating holes in the end face, the penetrating holes are preferably appropriately dispersed from the viewpoint of uniformly distributing the liquid to be treated in the column. A specific example is described by way of Figs. 2 and 3, which are schematic cross-sectional views of the end portion. The whole area of the inner wall surface of the partition wall at the end face of the casing is defined as $A_1$, and the center of gravity of $A_1$ is defined as O. The whole area $A_1$ of the inner wall surface of the partition wall is divided into 4 areas $A_4$ to $A_7$ by 2 straight lines that pass through the center of gravity O of the end face of the casing at a central angle of 90°. It should be noted that the above 2 lines are drawn such that the area ratio among the 4 areas $A_4$ to $A_7$ is as small as possible. An example of the $A_4$ to $A_7$ is shown in Fig. 2. The total areas of penetrating holes present in the areas $A_4$ to $A_7$ are defined as $S_4$ to $S_7$, respectively. Further, the 4 areas divided by the 2 straight lines produced by rotating the above 2 straight lines around the center of gravity O at an angle of 45° are defined as $A_8$ to $A_{11}$; and the total areas of penetrating holes present in the areas $A_8$ to $A_{11}$ are defined as $S_8$ to $S_{11}$, respectively. An example of $A_8$ to $A_{11}$ is shown in Fig. 3. In order to distribute the liquid to be treated uniformly in the column, $A_4$ to $A_{11}$ and $S_4$ to $S_{11}$ defined as .described above preferably satisfy the 2 items (i) and (ii) below. That is,

(i) when, among $S_4$ to $S_7$, the area having the largest total area is defined as $S_{max1}$ and the area having the smallest total area is defined as $S_{min1}$; and

among $S_8$ to $S_{11}$, the area having the largest total area is defined as $S_{max2}$ and the area having the smallest total area is defined as $S_{min2}$;

each of $S_{max1}/S_{min1}$ and $S_{max2}/S_{min2}$ is not more than 3.0;

(ii) each of the 4 areas $A_4$ to $A_7$ and the 4 areas $A_8$ to $A_{11}$ has at least one independent penetrating hole that is exclusively present in the area.

Each of $S_{max1}/S_{min1}$ and $S_{max2}/S_{min2}$ is more preferably not more than 2.0.

In cases where the casing of the purification column is too long, insertion of hollow fibers into the column may be difficult, and handling of the purification column upon its use may be difficult. In cases where the casing is too short, fixation of the contained hollow fibers may be difficult when the fibers are cut. Therefore, the casing length of the purification column is not less than 3 cm and not more than 1500 cm, more preferably not less than 5 cm and not more than 50 cm. The casing length herein means the length of the cylindrical casing along the axial direction before partition walls are provided or caps are attached.

The shape of the casing between the partition walls at the ends is not limited, and, in terms of the inner diameter of the casing, the ratio of the minimum casing inner diameter to the maximum casing inner diameter in a single column is preferably not less than 0.7 for exertion of the effect of the present invention.

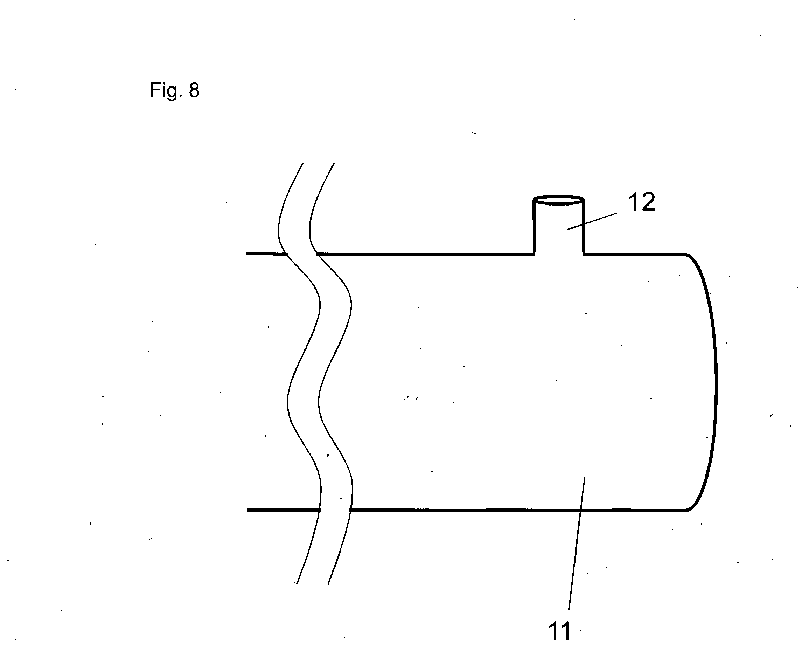

Further, an inlet(s) and/or outlet(s) may be provided in a protruding state in the vicinities of both ends of the outer circumference of the casing. In cases where, for example, the purification column of the present invention is provided for dialysis, the inlet or outlet provided in the casing may be called a "dialysis port" or the like. Further, as shown in Fig. 8, in order to introduce a resin for a partition wall into the cylindrical casing, a resin inlet may be provided at an end of the cylindrical casing. The dialysis port may also be used as a resin inlet.

The hollow fiber in the present invention means a cylindrical fiber membrane in which a hollow that can be used as a channel for the liquid to be treated is formed, wherein the open ends of the hollow are not sealed and the hollow opens in the outer side of the potting section (partition wall), which fiber body has a processing function.

As shown in later examples, hollow fibers are arranged such that hollow fiber bundles, each composed of a plurality of, preferably about 10000 to 100000, hollow fibers, are arranged in parallel in the longitudinal direction along the axial direction of the casing.

Examples of the material of the hollow fibers used in the present invention include polymethyl methacrylate (hereinafter referred to as PMMA), polyacrylonitrile (hereinafter referred to as PAN), polysulfone, polyethersulfone, polyarylethersulfone, polypropylene, polycarbonate, cellulose and cellulose triacetate. Among these, preferred examples of the material include materials having a property that allows adsorption of protein, such as PMMA and PAN.

The hollow fiber used in the present invention may have either an asymmetric structure or a uniform symmetric structure with respect to the direction of the thickness of the membrane thickness portion. A membrane having a symmetric structure is especially preferred since it has a uniform membrane structure in the membrane thickness direction and hence can secure a larger adsorption area. The symmetric structure in the present invention means a structure satisfying the requirement below, when the hollow fiber is cut vertically with respect to the longitudinal direction to expose the cross section of the membrane thickness portion and the cross section is observed with a scanning electron microscope (e.g., S-5500 manufactured by Hitachi, Ltd.). That is, in the cross section of the membrane thickness portion, the membrane thickness portion is divided into 2 equal parts along the direction of thickness of the membrane, and the area of the membrane thickness portion closer to the hollow portion of the hollow fiber is defined as the inner-surface-side area and the area of the membrane thickness portion closer to the outer surface of the hollow fiber is defined as the outer-surface-side area. In cases where pores are found in the cross section of the membrane thickness portion in the inner-surface-side area, the circle-equivalent diameter is determined for each pore. By averaging the obtained circle-equivalent diameters, the average pore diameter in the inner-surface-side area is obtained. Circle-equivalent diameters are similarly determined for the outer-surface-side area to obtain the average pore diameter in the outer-surface-side area. Photographs of 20 arbitrary areas each having a size of 2 $\mu$m $\times$ 2 $\mu$m are taken using a scanning electron microscope, and the average pore diameter is calculated. For calculation of the average pore diameter in each area, photographs of 20 arbitrary areas each having a size of 2 $\mu$m $\times$ 2 $\mu$m are taken using a scanning electron microscope ($\times$50,000), and the average pore diameter is calculated. In cases where the ratio of the average pore diameter in the outer-surface-side area to the average pore diameter in the inner-surface-side area (the average pore diameter in the outer-surface-side area / the average pore diameter in the inner-surface-side area) is 0.5 to 2.0, more preferably 0.75 to 1.5, the hollow fiber is judged to have a symmetric structure.

That is, in the present invention, in cases where the membrane thickness portion of the hollow fiber has a sponge-like pore structure, the pore size is preferably uniform in the direction of the membrane thickness.

Further, in the present invention, pores may be present in the membrane thickness portion of the hollow fiber. The average pore diameter of the membrane thickness portion is preferably 1 to 100 nm. When there are pores in the membrane thickness portion, in cases where the average pore diameter is too small, the substance to be adsorbed does not enter into the pores, so that the adsorption efficiency may be low. On the other hand, in cases where the pore diameter is too large, the substance to be adsorbed may not be adsorbed to the void portion, so that the adsorption efficiency may be low. That is, the optimum pore diameter varies depending on the size of the substance to be removed by adsorption, and, in cases where selection of the pore diameter is inappropriate, adsorption of the substance to be adsorbed may be insufficient. The average pore diameter of the hollow fiber membrane can be determined by differential scanning calorimetry (DSC) in which depression of the freezing point due to capillary condensation of water in the pores is measured.

Further, the porosity of the hollow fiber can be increased by using a negatively charged material as at least a part of the material of the hollow fiber. In this case, the opening ratio is large and the adsorptive area can be increased, which is preferred. In general, when an ionic group is contained, the hydrophilicity increases, and the material tends to be finely dispersed in a hydrophobic solvent (that is, many fine pores are formed). Examples of the material containing a negatively charged functional group include materials having substituents such as a sulfo group, carboxyl group, phosphate group, phosphite group, ester group, sulfite group, hyposulfite group, sulfide group, phenol group and hydroxysilyl group: In particular, at least one selected from a sulfo group, carboxyl group and ester group is preferred. Examples of materials having a sulfo group include vinylsulfonic acid, acrylsulfonic acid, methacrylsulfonic acid parastyrene sulfonic acid, 3-methacryloxypropane sulfonic acid, 3-acryloxypropane sulfonic acid and 2-acrylamido-2-methylpropanesulfonic acid, and their sodium salts, potassium salts, ammonium salts, pyridine salts, quinoline salts and tetramethylammonium salts. The amount of negative charge is preferably 5 $\mu$eq to 30 $\mu$eq per 1 g of dry hollow fibers. The amount of negative charge can be measured by, for example, the titration method.

Further, in cases where the purification column of the present invention is used for blood purification, examples of the substance to be removed by purification include $\beta$2-microglobulin (hereinafter referred to as $\beta$2-MG). Since $\beta$2-MG has a molecular weight of 11,800, it can pass through a smaller pore as compared to albumin, which has a molecular weight of about 67,000. However, in cases where $\beta$2-MG is to be removed by adsorption, the opening ratio on the inner surface needs to be increased to increase adsorption sites for $\beta$2-MG having the molecular weight of 11,800, that is, pores with a space into which $\beta$2-MG molecules can sufficiently enter. Therefore, leakage of albumin, having a higher molecular weight, may occur. In such a case, the more uniform the structure of the membrane, the more easily the leakage of albumin can be suppressed.

In the present invention, in cases where the membrane thickness of the hollow fiber is too small, the strength of the hollow fiber may be low, and, when blood is introduced into both sides of the hollow fiber, the adsorption sites in the membrane thickness portion may be easily saturated, leading to a low adsorption efficiency. On the other hand, in cases where the membrane thickness is too large, the center of the membrane thickness portion, which is distant from the inner and outer surfaces, may not be sufficiently utilized and become redundant. Further, in cases where the number of hollow fibers contained per column is small, the rate of phase separation may be largely different between the inner surface and the outer surface during the production, which is disadvantageous. Therefore, the membrane thickness of the hollow fiber is preferably not less than 20 $\mu$m, more preferably not less than 25 $\mu$m, and, on the other hand, it is preferably not more than 100 $\mu$m, more preferably not more than 75 $\mu$m. The membrane thickness can be determined by the following method. First, among the hollow fibers contained in the casing, 100 fibers are randomly extracted. Subsequently, at 2 arbitrary positions in a single hollow fiber, Ri, which is the inner diameter of the hollow fiber, and Ro, which is the outer diameter, are measured, to obtain the membrane thickness value at each position.

$$\text{Membrane thickness value} = (Ro\text{-}Ri) \, / \, 2$$

Other hollow fibers are also similarly subjected to determination of the membrane thickness values at the 2 positions, to obtain a total of 200 membrane thickness values. The total of 200 membrane thickness values obtained are averaged to obtain a final membrane thickness value.

Ri and Ro can be obtained by sufficiently washing the hollow fiber with pure water and then immediately sandwiching the hollow fiber between a slide glass and a cover glass, followed by measuring the values using a projector (e.g., V-10A, manufactured by Nikon). In cases where the number of hollow fibers contained in the casing is less than 100, all of these fibers are subjected to the measurement.

Further, in cases where the inner diameter of the hollow fiber is too small and the column is used for, for example, blood purification, pressure loss of blood may increase, and the amount of filtration may decrease due to clogging. On the other hand, in cases where the inner diameter is too large and the column is similarly used for blood purification, the amount of filling fluid in the blood purifier may increase and the burden of the patient may hence be large upon extracorporeal circulation. Therefore, the inner diameter of the hollow fiber is preferably 120 to 260 $\mu$m.

In the present invention, it is important to set the filling factor of the hollow fibers in the purification column appropriately. That is, in cases where the filling factor is low, dispersion of the hollow fibers in the column may be insufficient, and, even if the liquid treated is uniformly distributed from the penetrating holes in the column, the removal efficiency may be low due to unevenly positioned hollow fibers. Therefore, the filling factor of the hollow fibers is preferably not less than 35%, more preferably not less than 50%. On the other hand, in cases where the filling factor is too high, the amount of flow into the outside of the hollow fibers may decrease, and the pressure loss may increase. Thus, the filling factor is preferably not more than 80%, more preferably not more than 65%.

The filling factor herein can be calculated according to the equation below, wherein the volume of the hollow fibers contained in the casing is represented as Va, and the space volume of the casing is represented as Vj.

$$\text{Filling factor (\%)} = Va / Vj \times 100$$

Va is determined as follows. First, among the hollow fibers contained in the casing, 100 fibers are randomly extracted. Subsequently, at 2 arbitrary positions in a single hollow fiber, Ri, which is the inner diameter of the hollow fiber, and Ro, which is the outer diameter, are measured, to determine Va at each position.

$$Va = (Ro / 2)^2 \times \pi \times L - (Ri / 2)^2 \times \pi \times L$$

In this equation, L represents the shortest distance (length) between the outer walls of the partition walls at the ends of the casing. Other hollow fibers are also similarly subjected to determination of the Va values at the 2 positions in each hollow fiber, to obtain a total of 200 Va values. The total of 200 Va values obtained are averaged to obtain the final "volume of the hollow fibers contained in the casing, Va".

Ri and Ro can be obtained by sufficiently washing the hollow fiber with pure water and then immediately sandwiching the hollow fiber between a slide glass and a cover glass, followed by measuring the values using a projector (e.g., V-10A, manufactured by Nikon). In cases where the number of hollow fibers contained in the casing is less than 100, all of these fibers are subjected to the measurement.

Examples of the method for forming the penetrating holes of the partition walls of the present invention include the following method using a "partition-wall-forming jig".

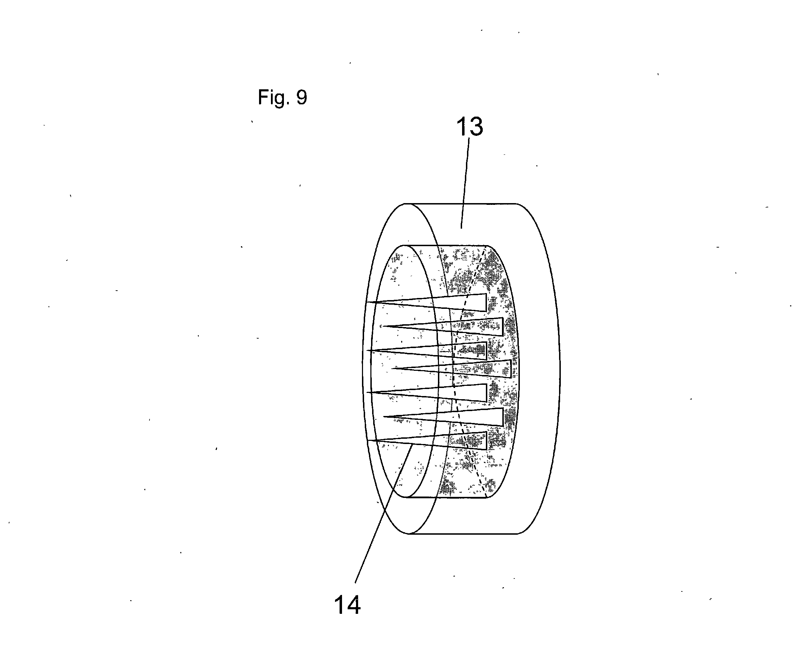

First, hollow fibers are placed in a plastic case or the like that is to be used as the cylindrical casing. Subsequently, a partition-wall-forming jig is tentatively installed at each end of the casing (tentative capping). The partition-wall-forming jig used herein has, as shown in Fig. 9, protruding portions for formation of penetrating holes on the inner surface. The protruding portions of the penetrating-hole-forming jig allow formation of penetrating holes on the partition wall.

Subsequently, a resin for fixing the hollow fibers to the case at both ends of the hollow fibers is placed in the cylindrical casing. Here, for the introduction of the resin into the cylindrical casing, a pore(s) for injection of the resin may be provided in the penetrating-hole-forming jig.

As required, after sealing the pores for injection of the resin, the cylindrical casing tentatively installed with the partition-wall-forming jigs is rotated with a centrifuge, to fill the both ends of the cylindrical casing uniformly with the resin. However, the spaces where the protruding portions of the penetrating-hole-forming jigs are present are not filled with the resin.

After solidification of the resin to form the partition walls, the penetrating-hole-forming jigs are removed to obtain a cylindrical casing filled with the resin at both ends. Since the spaces where the protruding portions of the penetrating-hole-forming jigs were present are not filled with the resin, penetrating holes are formed in the partition walls.

Subsequently, in the partition walls, the portions in which the hollow portions of the hollow fibers are clogged with the resin are removed by cutting with a cutter or the like. By this, partition walls in a state where the hollow fibers open to the outside of the partition walls can be formed.

By the above method, a purification column in which both ends of hollow fibers are fixed by bonding to the partition walls such that the both ends open to the outside of the partition walls, wherein penetrating holes are formed in the partition walls, can be obtained.

The number, positions, shapes and the like of the penetrating holes in each partition wall can be freely changed by the number, positions and shapes of the protruding portions of the partition-wall-forming jig. Since, when the jig is placed at an end of the column (end of the cylindrical casing), the protruding portions of the jig are inserted into gaps between the hollow fiber bundles, the tip of each protruding portion is preferably in the shape of a sharp needle.

The partition-wall-forming jig is preferably constituted by a plastic or a metal. In the former case, the jig is prepared by injection molding using a die or cutting of the material, and, in the latter case, the jig is prepared by cutting of the material. In preparation of penetrating holes, a partition wall may be formed in a conventional manner and then the holes may be formed with a tool having a sharply protruding tip, such as a drill or gimlet. However, in such a case, swarf may be produced and the fiber bundle may be damaged, which is not preferred.

In each penetrating hole in the partition wall, the shape of the pore connecting with the inner surface and outer surface may be either parallel or oblique to the direction of flow of the liquid to be treated in the column. As the material of the partition wall, a known thermosetting resin such as a polyurethane resin, epoxy resin or silicone resin is usually used, and a thermoplastic resin may also be used in some cases.

The present invention can be used for a variety of uses, and may also be used as a blood purifier. As treatment methods, there are a method in which whole blood is directly perfused and a method in which blood plasma is first separated from blood and then the separated blood plasma is passed through a column. The purification column of the present invention is applicable to both methods.

In cases where the purification column is used as a blood purifier, it is preferred to employ a method in which the purification column is incorporated in a extracorporeal circulation circuit, and adsorptive removal is carried out on line, from the viewpoint of throughput and simplicity of the operation. In this case, the purification column of the present invention may be used alone, or may be used after being connected in series to an artificial kidney upon dialysis or the like. Use of such a method enables removal of substances that cannot be sufficiently removed by an artificial kidney alone during dialysis. In particular, the purification column can complement the function of an artificial kidney by adsorptive removal of high-molecular-weight substances that are difficult to remove with the artificial kidney.

Further, in cases where the column is used together with an artificial kidney, the column may be connected, in the circuit, either upstream of the artificial kidney or downstream of the artificial kidney. An advantage of connecting the column upstream of the artificial kidney is that, since the purification column is hardly influenced by dialysis by the artificial kidney, the column can easily exert its original performance. On the other hand, an advantage of connecting the column downstream of the artificial kidney is that, since the column processes the blood after removal of water in the artificial kidney, the solute concentration is high and hence an increased adsorptive removal efficiency can be expected.

An example of preparation of the purification column of the present invention is described below.

[Preparation of Hollow Fiber]

A raw spinning solution is prepared by dissolving a polymer in a solvent. In this step, a polymer having a negatively charged group may be dissolved at the same time. As the negative charge increases and the raw solution concentration (concentration of the substance excluding the solvent in the raw solution) decreases, the porosity of the hollow fibers can be increased. Therefore, by appropriately setting the negatively charged group and the raw solution concentration, the porosity can be controlled. From this viewpoint, the raw solution concentration in the present invention is preferably not more than 30 wt%, more preferably not more than 27 wt%, still more preferably not more than 24 wt%. The hollow fiber can be obtained using a double-pipe ring-shaped slit type hollow-fiber-membrane die in which the liquid or gas for forming the hollow portion can be allowed to flow through the inner tube and the raw spinning solution can be allowed to flow through the outer tube, and passing these liquids and the like through a dry air portion having a predetermined distance, followed by extrusion into a coagulating bath. Examples of the liquid injected into the inner tube include solvents that can dissolve the above raw spinning solution; coagulants such as water and alcohol; mixtures of these; and hydrophobic liquids that are nonsolvents of polymers that can be dissolved in these or of mixtures therewith, such as aliphatic hydrocarbons including n-octane and liquid paraffin, and aliphatic esters including isopropyl myristate. Further, in cases where gelation of the extruded filament occurs in the air due to temperature change or a strong structure is rapidly formed by coagulation, an inert gas such as nitrogen gas or air may be used by self suction or injection. Such a gas injection method is a very advantageous in view of the process. In cases of a raw solution system that causes gelation due to temperature change, cold air is blown to the dry portion to promote gelation. The membrane thickness of the hollow fiber is generally controlled by the amount of raw spinning solution extruded, and the inner diameter is generally controlled by the amount of liquid and gas injected.

The raw spinning solution extruded from the double-pipe ring-shaped slit type hollow-fiber-membrane die is coagulated in a coagulating bath into a hollow fiber shape. The coagulating bath is usually composed of a coagulant such as water or alcohol, or a mixture with a solvent constituting the raw spinning solution. Water may be usually used. In the present invention, the above-mentioned solution having a negatively charged functional group may be added to the coagulating bath. Further, by controlling the temperature of the coagulating bath, the porosity can be changed. Since the porosity is influenced by the type of the raw spinning solution or the like, the temperature of the coagulating bath is also appropriately selected. In general, by increasing the temperature of the coagulating bath, the porosity can be increased. Although its mechanism is not, accurately known, it is thought that, in competitive reaction between desolvation from the raw solution and solidification shrinkage, a high-temperature bath causes rapid desolvation and hence coagulation fixation before shrinkage. However, in cases where the temperature of the coagulating bath is too high, the membrane pore size is too large. Therefore, for example, in cases where a membrane in which PMMA is contained in hollow fibers is prepared and a gas is placed in the inner pipe, the temperature of the coagulating bath is preferably not less than 39°C, more preferably not less than 42°C. On the other hand, the temperature is preferably not more than 50°C, more preferably not more than 46°C. In this step, as described above, blood compatibility can be improved by adding a solution having a negatively charged functional group to the coagulating bath.

Subsequently, a step of washing the solvent attaching to the coagulated hollow fiber is carried out. The method of washing the hollow fiber is not limited, and a method in which the hollow fiber is passed sequentially through baths filled with water (which are called water washing baths) is preferably employed. The temperature of the water in the water washing bath may be determined depending on the properties of the polymer constituting the membrane. For example, in cases of a membrane containing PMMA, the temperature is 30 to 50°C.

Further, a step of giving a moisturizing component may be added in order to keep the pore diameter of the hollow fiber after the water washing bath. The moisturizing component herein means a component that can keep humidity of the hollow fiber or a component that can prevent a decrease in humidity of the hollow fiber in the air. Representative examples of the moisturizing component include glycerin and aqueous solutions thereof.

After the water washing and giving the moisturizing component, the fiber may be passed through a step using a bath filled with a heated aqueous solution of a moisturizing component (which is called a heat treatment bath) in order to increase the dimensional stability of the contractile hollow fiber. The heat treatment bath is filled with a heated aqueous solution of a moisturizing component. When the hollow fiber passes through the heat treatment bath, contraction of the fiber occurs by the thermal action, and this can make the fiber less contractile in the later steps, stabilizing the membrane structure. The temperature for the heat treatment varies depending on the membrane material, and, in cases where a membrane containing PMMA, the temperature is preferably not less than 75°C, more preferably not less than 82°C. On the other hand, the temperature is preferably not more than 90°C, more preferably not more than 86°C.

[Preparation of Purification Column]

An example of the method for preparing a purification column using the obtained hollow fibers is as follows.

The hollow fibers are cut into an appropriate length, and a necessary number of hollow fibers are bundled, followed by placing the bundle into a plastic case that is to be used as the cylindrical portion of a blood purification module (cylindrical casing of the purification column). Thereafter, each end of the plastic case is tentatively capped with a partition-wall-forming jig having, on its inner surface, protruding portions for forming penetrating holes, and a resin for fixing the hollow fibers is placed in each end of the hollow fibers, to perform a potting step. In cases where the purification column is provided for a medical use, a polyurethane resin is preferably used as a medical potting resin. In this step, in view of uniformly filling the column with the resin, it is preferred to use a potting method in which, while the column is rotated with a centrifuge, the resin is injected from a potting resin inlet provided in a protruding state in the partition-wall-forming jig or from an inlet provided in a protruding state in the side of the casing of the column (dialysate port or resin inlet). After solidification of the resin to form the partition walls, the partition-wall-forming jigs are removed, and both ends of the resin are cut with a cutter or the like to remove the portions where the hollow fibers are clogged with the resin, to form open end faces. In this step, the protruding portions of the partition-wall-forming jigs make the penetrating holes. By the above method, the purification column of the present invention can be prepared.

An inlet for the liquid to be treated, which is called a header cap, and/or an outlet port may be attached to the obtained purification column.

In cases where the purification column is used for a medical device or the like, the column needs to be sterilized. Examples of the method of disinfection or sterilization include various disinfection/sterilization methods, such as autoclaving, gamma sterilization, ethylene oxide gas sterilization, chemical sterilization and UV sterilization. Among these, gamma sterilization is preferred since it has high sterilization efficiency and less influence on the material.

EXAMPLES

Example 1

With 376 parts by weight of dimethylsulfoxide, 31.7 parts by weight of syn-PMMA with a weight average molecular weight of 400,000, 31.7 parts by weight of syn-PMMA with a weight average molecular weight of 1,400,000, 16.7 parts by weight of iso-PMMA with a weight average molecular weight of 500,000, 20 parts by weight of a PMMA copolymer with a molecular weight of 300,000 containing 1.5 mol% sodium para-styrene sulfonate were mixed, and the resulting mixture was stirred at 110°C for 8 hours to prepare a raw spinning solution. The viscosity of the obtained raw spinning solution at 110°C was 1240 poise. The obtained raw spinning solution was extruded into the air at a rate of 2.5 g/min. from a double-pipe hollow-fiber-membrane die incubated at 93°C, which die has a ring-shaped slit with an outer diameter/inner diameter of 2.1/1.95 mm. In this step, nitrogen gas was injected into the inner pipe portion of the double pipe, and the portion in the air was allowed to run for 50 cm, followed by leading the portion into a coagulating bath. Hollow fibers were obtained in the coagulating bath at a temperature (coagulating-bath temperature) of 42°C. Each hollow fiber was washed with water, and, as a moisturizer, glycerin was given thereto as 63 wt% aqueous solution. At a heat treatment bath temperature of 86°C, excess glycerin was removed, and the hollow fibers were wound at 60 m/min. by winding spacer fibers around the hollow fibers. The inner diameter/membrane thickness of the obtained hollow fibers were 200/30 µm.

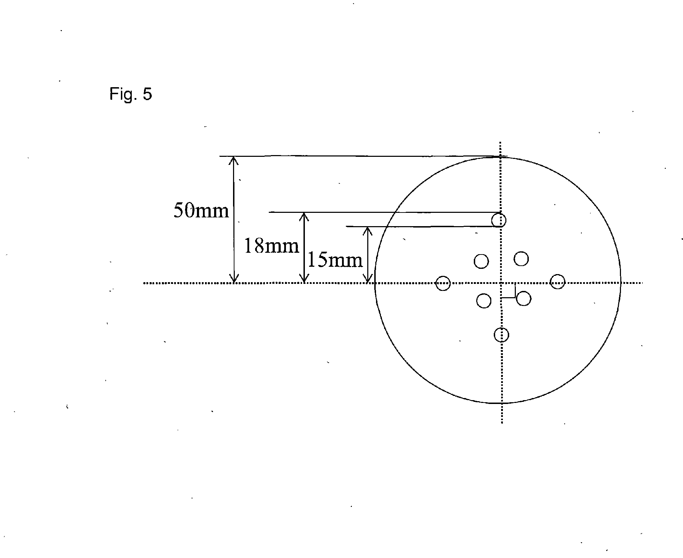

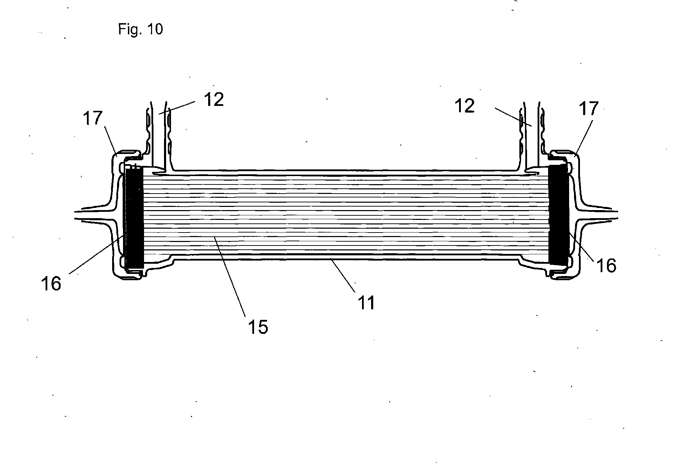

About 13000 hollow fibers obtained were bundled and mounted in a cylindrical plastic case having a circular cross section with an inner diameter of 40 mm (cylindrical casing having a resin inlet in the vicinity of each end), such that the effective membrane area of the inner portion of the hollow fibers was 1.6 m$^2$; the effective membrane area of the outer portion of the hollow fibers was 2.0 m$^2$; and the effective length (the effective length herein means the length determined by subtracting the lengths of the partition walls from the casing length) was 19.5 cm, to obtain a module. Thereafter, a jig for forming a potting portion (partition-wall-forming jig) was set at each end. The jigs used in this step for forming potting portions had protruding portions on the sides contacting with the end faces of the module (outer wall surfaces of the partition walls positioned at both ends of the casing) such that penetrating holes with the arrangement shown in Fig. 4 were formed on the end face (inner surface of the partition wall) in the side at which the liquid to be treated is introduced, and that penetrating holes with the arrangement shown in Fig. 6 were formed on the end face (inner surface of the partition wall) in the side at which the liquid to be treated is discharged. Although each end face had 8 penetrating holes as shown in Figs. 4 and 6, the penetrating holes on the end face in the side at which the liquid to be treated is introduced were constituted, as shown in Fig. 4 (and Fig. 5, which is a diagram drawn by rotating Fig. 4 at an angle of 45°), by 2 types of penetrating holes, that is, 4 penetrating holes at a distance of 7 mm from the center and 4 penetrating holes at a distance of 15 mm from the center, while all 8 penetrating holes on the end face in the side at which the liquid to be treated is discharged were positioned at the same distance from the center. While the module was rotated with a centrifuge, a resin was introduced from the resin inlets into both ends of the hollow fibers, and, after solidification of the resin, both ends were cut and the portions in which the fibers were clogged with the resin were removed with a cutter. A blood inlet called a header, and an outlet port were then attached, to prepare a purification column as shown in Fig. 10. As a result, a purification column having an end face as shown in Fig: 4 in the side at which the liquid to be treated is introduced, and an end face as shown in Fig. 6 in the side at which the liquid to be treated is discharged, was obtained. In both of the side at which the liquid to be treated is introduced and the side at which the liquid to be treated is discharged, the diameter of the end face of the partition wall of the obtained purification column was 50 mm, and all penetrating holes had a circular shape with a diameter of 3 mm. Subsequently, the inside of the column was washed with pure water, and each port was sealed with a cap, followed by wrapping the column with a film and performing gamma irradiation.

The obtained purification column was subjected to measurement of the clearance of β2-MG by the method shown below. The results are shown in Table 1.

(1) Method for Measuring Clearance of β2-MG

For evaluation of the performance of the adsorption column, the clearance of $\beta_2$-MG was measured. $\beta_2$-MG is known to be a causative protein for dialysis amyloidosis, which is a complication of long-term dialysis. The clearance of β2-MG was measured as follows.

1. To bovine plasma obtained by centrifuging bovine blood anticoagulated with ACD-A solution, β2-MG was added at 1 mg/L, to prepare a bovine plasma solution at a protein concentration of $6.5 \pm 0.5$ g/dL. This bovine plasma was divided into a 2-L aliquot for circulation and a 1.5-L aliquot for measurement of the clearance.

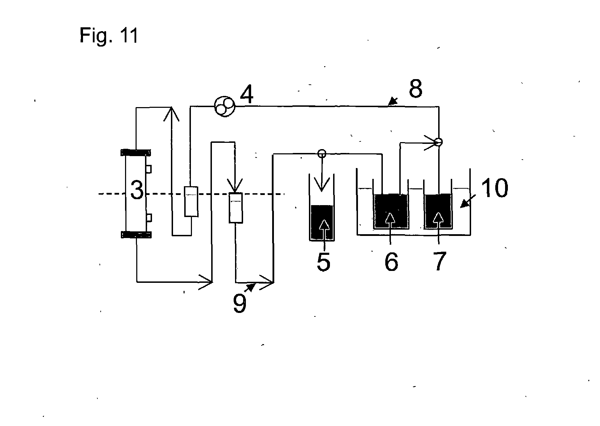

2. A circuit was set as shown in Fig. 11.

3. The inlet portion of the Bi circuit was placed in a beaker for circulation containing 2 L of the bovine blood (37°C) prepared as described above, and the Bi pump was started at a flow rate of 200 mL/min. The liquid that had been discharged from the outlet portion of the Bo circuit for 90 seconds was discarded, and the outlet portion of the Bo circuit was immediately inserted into the beaker for circulation, to achieve a circulating state.

4. After 1 hour of circulation, the pump was stopped.

5. The inlet portion of the Bi circuit was inserted into the bovine blood for measurement of the clearance, and the outlet portion of the Bo circuit was inserted into a beaker for disposal.

6. Using the closed circulation circuit shown in Fig. 11, 2 L of the bovine plasma solution was circulated at a flow rate in the blood side (inside the hollow fibers) (QBin) of 200 mL/min. and a filtrate flow rate of 10 mL/min./m$^2$.

7. The circulation was stopped, and the liquid to be supplied from the blood side was exchanged with fresh bovine plasma solution, followed by allowing the solution to flow using a single-path circuit at a flow rate in the blood side (inside the hollow fibers) (QBin) of 200 mL/min.

8. In 4 to 5 minutes after the beginning of the single-path liquid transfer, 10 ml of the liquid was collected from each of the liquid in the blood inlet side and the liquid in the blood outlet side, to provide samples for measurement of the clearance of β2-MG.

9. The β2-MG concentration in each sample of 4. was measured by latex agglutination immunoassay (see, for example, The Journal of Clinical Laboratory Instruments and Reagents, 26(2) 127-134, 2003). The β2-MG clearance is calculated according to the following equation: β2-MG clearance = (QBin × CBin - QBout × CBout) / CBin

CBin: β2-MG concentration in the blood inlet side (mg/L)
CBout: β2-MG concentration in the blood outlet side (mg/L)
QBin: Flow rate in the blood inlet side (mL/min.)
QBout: Flow rate in the blood outlet side (mL/min.)

Example 2

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a module. Thereafter, a jig for forming a potting portion was set at each of both ends.' The jigs used in this step for forming potting portions had protruding portions on the sides contacting with the end faces of the module such that penetrating holes with the arrangement shown in Fig. 6 were formed on the end face in the side at which the liquid to be treated is introduced, and that penetrating holes with the arrangement shown in Fig. 4 were formed on the end face in the side at which the liquid to be treated is discharged. While the module was rotated with a centrifuge, a resin was introduced from the resin inlets into both ends of the hollow fibers, and, after solidification of the resin, both ends were cut and the portions in which the fibers were clogged with the resin were removed with a cutter. A blood inlet called a header, and an outlet port were then attached, to prepare a purification column as shown in Fig. 10. As a result, a purification column having an end face as shown in Fig. 6 in the side at which the liquid to be treated is introduced, and an end face as shown in Fig. 4 in the side at which the liquid to be treated is discharged, was obtained. In both of the side at which the liquid to be treated is introduced and the side at which the liquid to be treated is discharged, the diameter of the end face of the partition wall of the obtained purification column was 50 mm, and all penetrating holes had a circular shape with a diameter of 3 mm. The subsequent steps and other conditions were the same as those in Example 1.
The obtained purification column was subjected to measurement of the clearance of β2-MG by the same method as in Example 1. The results are shown in Table 1.

Example 3

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a module. Thereafter, a jig for forming a potting portion was set at each of both ends. The jigs used in this step for forming potting portions had protruding portions on the sides contacting with'the end faces of the module such that penetrating holes with the arrangement shown in Fig. 4 were formed on both of the end faces in the side at which the liquid to be treated is introduced and the side at which the liquid to be treated is discharged. While the module was rotated with a centrifuge, a resin was introduced from the resin inlets into both ends of the hollow fibers, and, after solidification of the resin, both ends were cut and the portions in which the fibers were clogged with the resin were removed with a cutter. A blood inlet called a header, and an outlet port were then attached, to prepare a purification column as shown in Fig. 10. As a result, a purification column having an end face as shown in Fig. 4 in both of the side at which the liquid to be treated is introduced and the side at which the liquid to be treated is discharged was obtained. The subsequent steps and other conditions were the same as those in Example 1.
The obtained purification column was subjected to measurement of the clearance of β2-MG by the same method as in Example 1.

Example 4

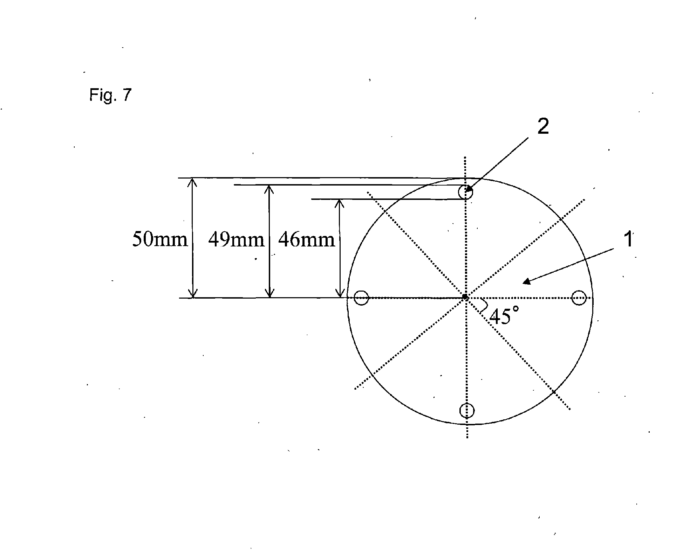

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a module. Thereafter, a jig for forming a potting portion was set at each of both ends. The jigs used in this step for forming potting portions had protruding portions on the sides contacting with the end faces of the module such that penetrating holes with the arrangement shown in Fig. 4 were formed in the side at which the liquid to be treated is introduced, and that penetrating holes with the arrangement shown in Fig. 7 where formed in the side at which the liquid to be treated is discharged. While the module was rotated with a centrifuge, a resin was introduced from the resin inlets into both ends of the hollow fibers, and, after solidification of the resin, both ends were cut and the portions in which the fibers were clogged with the resin were removed with a cutter. A blood inlet called a header, and an outlet port were then attached, to prepare a purification column as shown in Fig. 10. As a result, a purification column having end faces as shown in Figs. 4 and 7 in the side at which the liquid to be treated is introduced and the side at which the liquid to be treated is discharged, respectively, was obtained. The subsequent steps and other conditions were the same as those in Example 1.

The obtained purification column was subjected to measurement of the clearance of $\beta$2-MG by the same method as in Example 1.

Comparative Example 1

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a column. Thereafter, the hollow fibers were cut at both ends of the column, and, instead of fixation by potting, each end was fixed with a polyethylene terephthalate mesh (fiber diameter, 200 $\mu$m; aperture size, 435 $\mu$m) having a diameter of 40 mm and a thickness of 0.5 mm. Subsequently, the inside of the column was washed with pure water, and each port was sealed with a cap, followed by wrapping the column with a film and performing gamma irradiation. Other conditions were the same as those in Example 1.

The obtained purification column was subjected to measurement of the clearance of $\beta$2-MG by the same method as in Example 1.

Comparative Example 2

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a module. Thereafter, a jig for forming a potting portion was set at each of both ends. The jig used in this step was a conventional one having no protruding portions. The diameter of the end face of the partition wall of the obtained purification column was 50 mm in both of the side at which the liquid to be treated is introduced and the side at which the liquid to be treated is discharged. The subsequent steps and other conditions were the same as those in Example 1.

The obtained purification column was subjected to measurement of the clearance of $\beta$2-MG by the same method as in Example 1.

Comparative Example 3

About 13000 hollow fibers obtained in Example 1 were bundled and mounted in a cylindrical plastic case having a circular cross section with an inner diameter of 40 mm such that the effective membrane area of the inner portion of the hollow fibers was 1.6 m$^2$; the effective membrane area of the outer portion of the hollow fibers was 2.0 m$^2$; and the effective length was 19.5 cm, to obtain a module. Thereafter, a jig for forming a potting portion was set at each of both ends. The jig used in this step was a conventional one having no protruding portions. Further, by closing the potting liquid inlet of the jig in the side at which the liquid to be treated is discharged, a partition wall was formed only in the side at which the liquid to be treated is introduced. The diameter of the end face of the partition wall of the obtained purification column was 50 mm. The subsequent steps and other conditions were the same as those in Example 1.

The obtained purification column was subjected to measurement of the clearance of $\beta$2-MG by the same method as in Example 1.

Based on the above results, the purification columns having penetrating holes in the partition walls as shown in Examples 1 to 4 showed higher values of the $\beta$2-MG clearance than Comparative Examples 1 and 2.

Examples 1, 2, 3 and 4 showed higher values of the $\beta$2-MG clearance than Comparative Examples 1, 2 and 3.

It is thought that, in Comparative Example 1, since the sealing was carried out only with meshes, distribution of the liquid to be treated into the inside and outside of the hollow fiber membrane was not appropriate. Further, in terms of Comparative Example 2, it is thought that the $\beta$2-MG clearance was low since the liquid to be treated could not flow through the outside of the hollow fibers. In terms of Comparative Example 3, it is thought that the $\beta$2-MG clearance was low since the liquid to be treated hardly flowed through the outside of the hollow fibers.

Based on comparison among Examples 1 to 4, the $\beta$2-MG clearance was especially high in Example 1 as compared to Examples 2 and 3. Therefore, it is thought that hollow fibers in the column can be utilized as effectively as possible by, as in Example 1, arranging penetrating holes in the vicinity of the outer circumference of the end face in the side of the inlet for the liquid to be treated, and arranging penetrating holes in the vicinity of the center of the end face in the side of the outlet. On the other hand, it is thought that the reason why the performance was lower in Example 3 was that, since the penetrating holes were placed in the vicinity of the center in both of the side of the inlet for the liquid to be treated and the side of the outlet for the liquid to be treated, the amount of the liquid to be treated that flowed through the outside of hollow fibers in the outer circumference portion was small. In terms of Example 4, it is thought that the lower $\beta$2-MG clearance than in Example 1 was due to a smaller number of penetrating holes and a smaller area of penetrating holes, resulting in a decreased flow rate in the circumference portion.

[Table 1]

|  | $\beta$2-MG clearance (ml/min.) |
|---|---|
| Example 1 | 75 |
| Example 2 | 74 |
| Example 3 | 69 |
| Example 4 | 72 |
| Comparative Example 1 | 60 |
| Comparative Example 2 | 45 |
| Comparative Example 3 | 47 |

DESCRIPTION OF SYMBOLS

$A_1$ Whole area of the partition wall in the end face of the casing
$A_2$ Area surrounded by the similar figure of $A_1$ with a scale factor of 1/2 whose center of gravity is located at O, which is the center of gravity of $A_1$
$A_3$ Area excluding $A_2$ from $A_1$
O Center of gravity of $A_1$
$A_4$ to $A_7$ Four areas in $A_1$ divided by 2 arbitrary straight lines that pass through the center of gravity O at a central angle of 90°, which lines equally divide the area of the end face into 4 parts

1. Partition wall end face
2. Penetrating hole
3. Purification column
4. Bi pump
5. Container for disposal
6. Blood for circulation
7. Blood for measurement of the clearance
8. Bi circuit
9. Bo circuit
10. Di circuit
11. Cylindrical casing
12. Resin inlet
13. Partition-wall-forming jig
14. Protruding portion for forming a penetrating hole
15. Hollow fiber
16. Partition wall .
17. Header

Claims

1. A purification column comprising a cylindrical casing having partition walls formed at both side ends, said casing containing therein hollow fibers whose both ends are fixed by bonding to said partition walls such that said both ends open to the outside of said partition walls, wherein penetrating holes that penetrate the partition walls to communicate with the inside and outside of the casing are formed in the partition walls at both ends of said casing.

2. The purification column according to claim 1 satisfying the items (a) and (b) below when, on each of the inner wall surfaces of the partition walls at the end faces of said casing, the whole area is defined as $A_1$; the center of gravity of $A_1$ is defined as O; the area surrounded by the similar figure of $A_1$ with a scale factor of 1/2 whose center of gravity is located at O similarly to $A_1$ is defined as $A_2$; and the area excluding $A_2$ from $A_1$ is defined as $A_3$:

    (a) on the inner wall surface of the partition wall in the side at which the liquid to be treated is introduced, the area of penetrating holes present in $A_3$ corresponds to not less than 70% of the total area of penetrating holes;
    (b) on the inner wall surface of the partition wall in the side at which the liquid to be treated is discharged, the area of penetrating holes present in $A_2$ corresponds to not less than 70% of the total area of penetrating holes.

3. The purification column according to claim 1 satisfying the items (c) and (d) below when, on each of the inner wall surfaces of the partition walls at the end faces of said casing, the whole area is defined as $A_1$; the center of gravity of $A_1$ is defined as O; the area surrounded by the similar figure of $A_1$ with a scale factor of 1/2 whose center of gravity is located at O similarly to $A_1$ is defined as $A_2$; and the area excluding $A_2$ from $A_1$ is defined as $A_3$:

    (c) on the inner wall surface of the partition wall in the side at which the liquid to be treated is introduced, the area of penetrating holes present in $A_2$ corresponds to not less than 70% of the total area of penetrating holes;
    (d) on the inner wall surface of the partition wall in the side at which the liquid to be treated is discharged, the area of penetrating holes present in $A_3$ corresponds to not less than 70% of the total area of penetrating holes.

4. The purification column according to any one of claims 1 to 3, wherein, on each of the inner wall surfaces of the partition walls at the end faces of said casing, the area of each penetrating hole is not more than 1/8 of the area of said area $A_1$, and the total area of said penetrating holes is 1/1000 to 1/2 of the area of said area $A_1$.

5. The purification column according to any one of claims 1 to 4 satisfying the items (i) and (ii) below when, on each of the inner wall surfaces of the partition walls at the end faces of said casing,
the whole area is defined as $A_1$ and the center of gravity of $A_1$ is defined as O;
the whole area $A_1$ of the inner wall surface of each partition wall is divided into 4 areas $A_4$ to $A_7$ by 2 arbitrary straight lines that pass through the center of gravity O at a central angle of 90°;
the total areas of penetrating holes present in the areas $A_4$ to $A_7$ are defined as $S_4$ to $S_7$, respectively;
the 4 areas divided by the 2 straight lines produced by rotating said 2 straight lines around the center.of gravity O at an angle of 45° are defined as $A_8$ to $A_{11}$; and
the total areas of penetrating holes present in the areas $A_8$ to $A_{11}$ are defined as $S_8$ to $S_{11}$, respectively:

    (i) when, among $S_4$ to $S_7$, the area having the largest total area is defined as $S_{max1}$ and the area having the smallest total area is defined as $S_{min1}$; and
among $S_8$ to $S_{11}$, the area having the largest total area is defined as $S_{max2}$ and the area having the smallest total area is defined as $S_{min2}$;
each of $S_{max1}/S_{min1}$ and $S_{max2}/S_{min2}$ is not more than 3.0;
    (ii) each of the 4 areas $A_4$ to $A_7$ and the 4 areas $A_8$ to $A_{11}$ has at least one independent penetrating hole that is exclusively present in the area.

6. The purification column according to any one of claims 1 to 5; wherein the filling factor of said hollow fibers in said casing is not less than 35%.

7. The purification column according to any one of claims 1 to 6, wherein said hollow fiber has a uniform symmetric membrane structure along the direction of thickness of the membrane.

8. The purification column according to any one of claims 1 to 7, wherein the membrane thickness of said hollow fiber is 20 $\mu$m to 100 $\mu$m.

9. The purification column according to any one of claims 1 to 8, which is a blood purifier.

10. The purification column according to any one of claims 1 to 9, which is used by being connected in series to an artificial kidney.

11. A method for producing a purification column, said method comprising installing partition-wall-forming jigs at both ends of a cylindrical casing containing hollow fibers and forming partition walls at both side ends of said casing such that said hollow fibers are fixed by bonding to said partition walls in the state where the both ends of said hollow fibers open to the outside of said partition walls, wherein each partition-wall-forming jig has, in the inner side thereof, protruding portions for forming penetrating holes.

Fig. 1

Fig. 2

$A_4$

$A_7$

O

$A_5$

$A_6$

Fig. 3

Fig. 4

Fig. 5

50mm

18mm

15mm

Fig. 6

Fig. 7

Fig. 8

Fig. 9

Fig. 10

Fig. 11

# EP 2 762 180 A1

<table>
<tr><td colspan="2" align="center"><b>INTERNATIONAL SEARCH REPORT</b></td><td colspan="2">International application No.<br>PCT/JP2012/074629</td></tr>
</table>

**A. CLASSIFICATION OF SUBJECT MATTER**
*A61M1/36*(2006.01)i, *A61M1/18*(2006.01)i, *B01D63/00*(2006.01)i, *B01D63/02*(2006.01)i, *B01D69/08*(2006.01)i

According to International Patent Classification (IPC) or to both national classification and IPC

**B. FIELDS SEARCHED**

Minimum documentation searched (classification system followed by classification symbols)
A61M1/36, A61M1/18, B01D63/00, B01D63/02, B01D69/08

Documentation searched other than minimum documentation to the extent that such documents are included in the fields searched
Jitsuyo Shinan Koho          1922–1996     Jitsuyo Shinan Toroku Koho     1996–2012
Kokai Jitsuyo Shinan Koho    1971–2012     Toroku Jitsuyo Shinan Koho     1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-504020 A (Akzo Nobel N.V.),<br>05 February 2002 (05.02.2002),<br>entire text; all drawings<br>& US 6270674 B1          & WO 1998/057733 A1 | 1-11 |
| A | JP 2003-525736 A (MAT Adsorption Technologies GmbH & Co. KG),<br>02 September 2003 (02.09.2003),<br>entire text; all drawings<br>& US 2003/0111414 A1     & WO 2001/066237 A1 | 1-11 |
| A | JP 2003-225304 A (Toray Industries, Inc.),<br>12 August 2003 (12.08.2003),<br>entire text; all drawings<br>(Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 December, 2012 (19.12.12) | Date of mailing of the international search report<br>    08 January, 2013 (08.01.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/074629

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-254695 A  (Nikkiso Co., Ltd.), 05 November 2009 (05.11.2009), entire text; all drawings & US 2011/0033704 A1     & EP 2266642 A1 & WO 2009/128564 A1       & CN 102006899 A | 1-11 |
| A | JP 6-14996 A  (Kawasumi Laboratories, Inc.), 25 January 1994 (25.01.1994), entire text; all drawings (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2029260 A
- JP 8141076 A
- JP 5161831 A
- JP 5161832 A
- JP 6343836 A
- JP 2007090309 A
- JP 2009254695 A
- JP 2011156022 A
- WO 2009128564 A
- JP 2002504020 PCT

**Non-patent literature cited in the description**

- *The Journal of Clinical Laboratory Instruments and Reagents,* 2003, vol. 26 (2), 127-134